# EUROPÄISCHE PATENTSCHRIFT

(11) **EP 0 943 497 B1**
(45) Veröffentlichungstag und Bekanntmachung des Hinweises auf die Patenterteilung: **19.05.2004**
(21) Anmeldenummer: 99104462.9
(22) Anmeldetag: 05.03.1999
(51) Int. Cl.: B60R 13/02

(54) **Vorrichtung zur Befestigung eines Innenverkleidungsteils eines Kraftfahrzeugs**
Fastening device for vehicle inner linings
Dispositif de fixation pour élément de garniture intérieur d'un véhicule

(30) Priorität: 14.03.1998 DE 29804637 U
(43) Veröffentlichungstag der Anmeldung: 22.09.1999
(73) Patentinhaber: Seeber AG & Co., 68165 Mannheim (DE)
(72) Erfinder: Herr, Wolfgang, 76534 Baden-Baden (DE)
(74) Vertreter: Lasch, Hartmut Dipl.-Ing.

(56) Entgegenhaltungen:
- EP-A- 0 641 939
- EP-A- 0 678 408
- DE-A- 3 908 106
- DE-A- 19 712 970
- DE-U- 29 701 805

## Beschreibung

Die Erfindung betrifft eine Vorrichtung eines Innenverkleidungsteils an einer Tragkonstruktion eines Kraftfahrzeuges, wobei am Verkleidungsteil oder der Tragkonstruktion ein Eingriffsteil angebracht ist, das in eine am entsprechend anderen Bauteil ausgebildete Aufnahme eingreift.

Für die wirtschaftliche Herstellung eines Kraftfahrzeuges ist es u. a. notwendig, die relativ zahlreichen Innenverkleidungsteile schnell und in einfacher Weise zuverlässig montieren zu können. Bei den zur Befestigung üblicherweise verwendeten Vorrichtungen wird am Verkleidungsteil eine Federklammer angebracht, die in eine Halteöse an der Tragkonstruktion und insbesondere einem Blechteil eingreift. Zum Ausgleich der herstellungsbedingten Maßabweichungen sowie von unterschiedlichen Schrumpfungserscheinungen der zu montierenden Bauteile ist eine Verformung der Federklammer vorgesehen. Es hat sich jedoch gezeigt, daß auf diese Weise nur relativ geringe Maßabweichungen ausgeglichen werden können, so daß hohe Anforderungen an die Maßgenauigkeit der Innenverkleidungsteile zu stellen sind. Dies ist jedoch herstellungstechnisch ungünstig und kostenintensiv.

Aus der DE 29701805U1 ist eine Vorrichtung gemäß dem Oberbegriff des Anspruchs 1 bekannt. Weiterhin ist aus der DE 19712970A1 eine Vorrichtung zur Befestigung eines Innenverkleidungsteils bekannt, die eine Federvorrichtung bzw. ein Schaumstoffmaterial aufweist, die bzw. das zwischen einem Karosserieteil und dem Innenverkleidungsteil angeordnet ist, und die bzw. das das Karosserieteil und das Innenverkleidungsteil gegeneinander unter Vorspannung setzt.

Der Erfindung liegt die Aufgabe zugrunde, eine Vorrichtung zur Befestigung eines Innenverkleidungsteils in einem Kraftfahrzeug zu schaffen, die eine kostengünstige Montage des Verkleidungsteils und einen Ausgleich von großen Maßabweichungen ermöglicht.

Diese Aufgabe wird mit einer Vorrichtung gemäß dem Anspruch 1 gelöst.

Aufgrund des losen Eingriffs zwischen dem Verkleidungsteil und der Tragkonstruktion können bei der Montage des Verkleidungsteils auch relativ große Maßabweichungen problemlos aufgenommen werden. Dabei ist in der Regel jedoch ein einzelner Festlagerpunkt zwischen dem Verkleidungsteil und der Tragkonstruktion vorgesehen. Indem das Eingriffsteil die Aufnahme hintergreift, kann das Verkleidungsteil auszugssicher an der Tragkonstruktion angebracht werden. Um das Verkleidungsteil relativ zur Tr konstruktion festzulegen, ist zwischen dem Verkleidungsteil und der Tragkonstruktion die Federvorrichtung vorgesehen, die diese beiden Bauteile in ihrer Einbaulage verspannt und somit relativ zueinander festhält. Es hat sich gezeigt, daß auf diese Weise nicht nur sehr kurze Montagezeiten zu erreichen sind, sondern es ergibt sich auch eine gute Anpassungsfähigkeit an Maßabweichungen sowie die Möglichkeit von Bauhöhenkorrekturen und einem entsprechenden Ausgleich.

In der Erfindung ist vorgesehen, daß die Federvorrichtung von einem den Zwischenraum zwischen dem Verkleidungsteil und der Tragkonstruktion zumindest teilweise ausfüllenden, elastischen Schaummaterial gebildet ist, das die beiden Bauteile in der voneinander weg gerichteten Richtung beaufschlagt und somit sicher verspannt.

Das Eingriffsteil wird vorzugsweise separat vorgefertigt und anschließend am Verkleidungsteil oder der Tragkonstruktion angebracht. Zu diesem Zweck weist es einen Basisabschnitt auf, mit dem es beispielsweise in eine entsprechend ausgebildete Ausnehmung eingerastet wird. Über einen Steg ist im Abstand vom Basisabschnitt ein Eingriffsschuh ausgebildet, der in eine Ausnehmung der Aufnahme einführbar ist und diese hintergreift. Das Einführen des Eingriffsschuhs in die Ausnehmung der Aufnahme ist erleichtert, wenn der Eingriffsschuh an seinem Einführende verjüngt ist und/oder an seinem Einführende vom Basisteil weggerichtet ist.

Auch die Aufnahme kann von einem separat vorgefertigten Halteteil gebildet sein, das am Verkleidungsteil oder der Tragkonstruktion anbringbar ist. In bevorzugter Ausführung wird das Eingriffsteil an der Tragkonstruktion befestigt und die Aufnahme an dem Verkleidungsteil ausgebildet. Es ist jedoch auch möglich, das Eingriffsteil an dem Verkleidungsteil auszubilden und direkt in eine Ausnehmung des Blechrahmens des Kraftfahrzeuges eingreifen zu lassen.

Weitere Einzelheiten und Merkmale der Erfindung sind aus der folgenden Beschreibung eines Ausführungsbeispiels unter Bezugnahme auf die beigefügte Zeichnung ersichtlich. Es zeigen:
- Figur 1: eine perspektivische Ansicht eines Halteteils,
- Figur 2: eine perspektivische Ansicht eines Eingriffsteils und
- Figur 3: eine ausschnittsweise Aufsicht auf ein mittels der Befestigungsvorrichtung montiertes Verkleidungsteil.

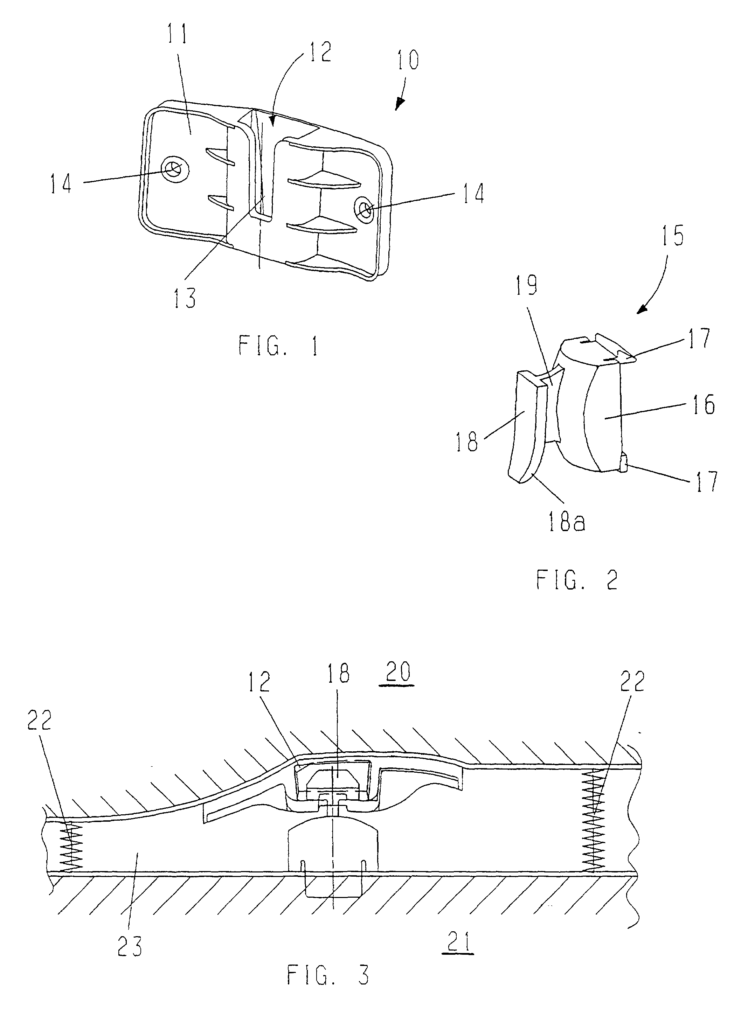

Figur 1 zeigt ein aus Kunststoff bestehendes Halteteil 11, das eine Aufnahme 10 für ein in Figur 2 dargestelltes Eingriffsteil 15 bildet. Zu diesem Zweck ist das Halteteil 11 mit einer von oben zugänglichen Ausnehmung 12 versehen, die an ihrer Außenseite einen vom oberen Rand ausgehenden, vertikal nach unten verlaufenden Schlitz 13 besitzt. Das Halteteil 11 kann über Befestigungspunkte 14 an einem Innenverkleidungsteil 20 angebracht werden, wie in Figur 3 gezeigt ist.

Das Eingriffsteil 15 besitzt einen Basisabschnitt 16, der auf seiner Rückseite angeformte Eingriffsfinger 17 aufweist, mit denen das Eingriffsteil in einer entsprechenden Ausnehmung einer in Figur 3 schematisch angedeuteten Tragkonstruktion 21 verrastet werden kann.

Auf der den Eingriffsfingern 17 entgegengesetzten Seite des Basisteils 16 ist ein vertikaler vorstehender Steg 19 angeformt, der an seinem vorderen Ende einen quer dazu verlaufenden Eingriffschuh 18 trägt. Der Eingriffsschuh 18 verjüngt sich an seinem unteren Einführende 18a und ist dort leicht vom Basisteil 16 weggebogen.

Zur Montage des Verkleidungsteils 20 an der Tragkonstruktion 21 wird der Eingriffsschuh 18 von oben in die Ausnehmung 12 des Halteteils 11 eingeführt, wobei der Steg 19 im Schlitz 13 zu liegen kommt. Da der Steg 19 wesentlich dünner als die Breite des Schlitzes 13 ist und da der Eingriffsschuh 18 dünner als die Höhe der Ausnehmung 12 ist, greift der Eingriffsschuh 18 nur lose unter erheblichem Spiel in die Ausnehmung 12 ein, kann jedoch senkrecht zur Einführrichtung, d.h. nach außen nicht abgezogen werden, da der Eingriffsschuh 18 breiter als der Schlitz 13 ist.

Um das Verkleidungsteil 20 relativ zur Tragkonstruktion 21 zu fixieren, ist in dem Zwischenraum 23 zwischen dem Verkleidungsteil 20 und der Tragkonstruktion 21 eine in Figur 3 schematisch angedeutete Federvorrichtung 22 vorgesehen, bei der es sich um einen den Zwischenraum 23 zumindest teilweise ausfüllenden, elastischen Schaum handelt.

## Patentansprüche

1. Vorrichtung zur Befestigung eines Innenverkleidungsteils (20) an einer Tragkonstruktion (21) eines Kraftfahrzeuges, wobei am Verkleidungsteil (20) oder der Tragkonstruktion (21) ein Eingriffsteil (15) angebracht ist, das in eine am entsprechend anderen Bauteil (21 oder 20) ausgebildete Aufnahme (10) eingreift und diese hintergreift, und zwischen dem Verkleidungsteil (20) und der Tragkonstruktion (21) eine diese Bauteile verspannende Federvorrichtung (22) vorgesehen ist, **dadurch gekennzeichnet, daß** das Eingriffsteil (15) lose unter Spiel in die Aufnahme (10) eingreift und daß die Federvorrichtung (22) von einem den Zwischenraum (23) zwischen dem Verkleidungsteil (20) und der Tragkonstruktion (21) zumindest teilweise ausfüllenden elastischen Schaummaterial gebildet ist.

2. Vorrichtung nach Anspruch 1, **dadurch gekennzeichnet, daß** das Eingriffsteil (15) einen Basisabschnitt (16) und einen mit Abstand vom Basisabschnitt (16) angeordneten, in eine Ausnehmung (12) der Aufnahme (10) einführbaren Eingriffsschuh (18) aufweist.

3. Vorrichtung nach Anspruch 2, **dadurch gekennzeichnet, daß** der Eingriffsschuh (18) an seinem Einführende (18a) verjüngt ist.

4. Vorrichtung nach Anspruch 2 oder 3, **dadurch gekennzeichnet, daß** der Eingriffsschuh (18) an seinem Einführende (18a) vom Basisteil (16) weggerichtet ist.

5. Vorrichtung nach einem der Ansprüche 1 bis 4, **dadurch gekennzeichnet, daß** die Aufnahme (10) an einem Halteteil (11) ausgebildet ist, das am Verkleidungsteil (20) oder der Tragkonstruktion (21) anbringbar ist.

6. Vorrichtung nach einem der Ansprüche 1 bis 5, **dadurch gekennzeichnet, daß** das Eingriffsteil (15) an der Tragkonstruktion (21) befestigt und die Aufnahme (10) an dem Verkleidungsteil (20) ausgebildet ist.

## Claims

1. Device for fastening an inner lining part (20) to a support structure (21) of a motor vehicle, an engagement part (15) being fitted to the lining part (20) or the support structure (21) and engages in a receptacle (10) constructed on the corresponding, other component (21 or 20) and engages behind the same and between the lining part (20) and the support structure (21) is provided a spring mechanism (22) bracing said components, **characterized in that** the engagement part (15) engages loosely and with clearance in the receptacle (10) and that the spring mechanism (22) is formed by an elastic foam material at least partly filling the gap (23) between the lining part (20) and the support structure (21).

2. Device according to claim 1, **characterized in that** the engagement part (15) has a base section (16) and an engagement shoe (18) insertable in a recess (12) of the receptacle (10) and which is spaced from the base section (16).

3. Device according to claim 2, **characterized in that** the insertion end (18a) of the engagement shoe (18) is tapered.

4. Device according to claim 2 or 3, **characterized in that** the insertion end (18a) of the engagement shoe (18) is directed away from the base section (16).

5. Device according to one of the claims 1 to 4, **characterized in that** the receptacle (10) is constructed on a holding part (11), which can be fitted to the lining part (20) or the support structure (21).

6. Device according to one of the claims 1 to 5, **characterized in that** the engagement part (15) is fastened to the support structure (21) and the receptacle (10) is constructed on the lining part (20).

## Revendications

1. Dispositif de fixation d'un élément de garniture intérieure (20) sur la structure (21) d'un véhicule à moteur, dans lequel une pièce d'accouplement (15) est disposée sur l'élément de garniture (20) ou sur la structure (21), pièce venant en prise dans un logement (10) ménagé dans l'autre élément de construction (21 ou 20) correspondant, et dans lequel est prévu entre l'élément de garniture (20) et la structure (21) un dispositif à effet élastique (22) déformant ces éléments de construction, **caractérisé en ce que** la pièce d'accouplement (15) vient en prise de manière flottante avec jeu dans le logement (10) et **en ce que** le dispositif à effet élastique (22) est constitué par une mousse élastique remplissant au moins partiellement l'espace intermédiaire (23) entre l'élément de garniture (20) et la structure (21).

2. Dispositif selon la revendication 1, **caractérisé en ce que** la pièce d'accouplement (15) présente une base (16) et un patin d'accouplement (18) disposé à distance de la base (16) et pouvant être introduit dans un évidement (12) du logement (10).

3. Dispositif selon la revendication 2, **caractérisé en ce que** le patin d'accouplement (18) est rétréci à son extrémité d'introduction (18a).

4. Dispositif selon la revendication 2 ou 3, **caractérisé en ce que** le patin d'accouplement (18) s'éloigne de la base (16) au niveau de son extrémité d'introduction (18a).

5. Dispositif selon l'une quelconque des revendications 1 à 4, **caractérisé en ce que** le logement (10) est conformé dans un élément de maintien (11) pouvant être monté sur l'élément de garniture (20) ou sur la structure (21).

6. Dispositif selon l'une quelconque des revendications 1 à 5, **caractérisé en ce que** la pièce d'accouplement (15) est fixée sur la structure (21) et **en ce que** le logement (10) est ménagé dans l'élément de garniture (20).
